# EUROPÄISCHE PATENTSCHRIFT

(11) **EP 0 896 662 B1**
(45) Veröffentlichungstag und Bekanntmachung des Hinweises auf die Patenterteilung: **18.10.2000**
(21) Anmeldenummer: 97919384.4
(22) Anmeldetag: 18.04.1997
(51) Int. Cl.: G01N 21/03, G01N 21/13

(54) **KÜVETTENRIEGEL**
CUVETTE RAIL
BARRE A CUVETTES

(30) Priorität: 24.04.1996 DE 29607461 U
(43) Veröffentlichungstag der Anmeldung: 17.02.1999
(73) Patentinhaber: LAbor Laborgeräte + Analysensysteme Vertriebsgesellschaft mbH, 22926 Ahrensburg (DE)
(72) Erfinder: Kloth, Bernd, 22926 Ahrensburg (DE)
(74) Vertreter: Richter, Werdermann & Gerbaulet
(86) Internationale Anmeldenummer: EP9701945
(87) Internationale Veröffentlichungsnummer: WO9740362

(56) Entgegenhaltungen:
- DE-A- 2 435 317
- DE-A- 2 819 820
- DE-A- 2 904 597
- DE-U- 9 218 750
- US-A- 4 639 135
- US-A- 4 787 744

## Beschreibung

### Technisches Gebiet

Die Erfindung betrifft einen Küvettenriegel zur Aufnahme von optisch zu untersuchenden Substanzen, vorzugsweise zur Verwendung bei automatisierten Analysenvorgängen, der über in Reihe angeordnete Meßküvetten verfügt, die einendseitig offen und im Öffnungsbereich miteinander verbunden sind.

Gattungsgemäße Küvettenriegel werden, z. B. bei der Bestimmung von Parametern des Blutgerinnungssystems eingesetzt. Die Durchführung der Analysen wird zumeist weitgehend automatisiert durchgeführt, wobei der Küvettenriegel bzw. die Meßküvetten bereits mit Reagenzien und ggf. mit einem Rührkörper versehen sind und wobei die Meßküvetten, z. B. mit einer Verschlußfolie, meist aus Aluminium, verschlossen sind.

Dazu sind mehrere Variationsmöglichkeiten bekannt. So ist ein "endloser" Küvettenriegel vorgeschlagen worden, bei dem es sich jedoch letztlich um einzelne Meßküvetten handelt, die über die sie verschließende Folie miteinander verbunden sind. Bei Bedarf wird die benötigte Anzahl von Meßküvetten mit der Folie abgetrennt.

Nachteilig ist es hier jedoch, daß zur weiteren Verwendung der Meßküvetten eine Halterungsvorrichtung benötigt wird, die eine Benutzung und vor allen Dingen eine automatisierte Benutzung erst ermöglicht. Zudem ist die Gefahr sehr groß, daß sich bei der Handhabung die Folie löst und so einzelne Meßküvetten vorzeitig unbrauchbar werden.

Ein entsprechender Küvettenriegel wird in der US 4,787,744 beschreiben. Dieser Küvettenriegel besteht aus einem langgestreckten kubischen Körper, der als Halter dient und in den die einzelnen Meßküvetten eingesteckt werden, wobei eine Meßküvette asymmetrisch zu den anderen Meßküvetten angeordnet ist.

Bei anderen Varianten, wie z.B. aus der DE-U 92 18 750 bekannt, sind die Meßküvetten fest miteinander verbunden, wobei eine definierte Anzahl von Meßküvetten vorgesehen ist. Dabei sind Teile der Wandung der Meßküvetten als Verbindungselement ausgeführt oder das die Öffnung der Meßküvetten umgebende Verbindungselement dient zur Ausbildung einer gemeinsamen Oberfläche. Wenn die Oberfläche mit der Verschlußfolie belegt wird, sind die Öffnungen der Meßküvetten verschlossen.

Auch bei diesen Küvettenriegeln erweist sich die Anbringung der Verschlußfolie als nachteilig, da eine randseitige Beschädigung der Folie sofort zur Öffnung mindestens einer Meßküvette führt.

Außerdem ist bei allen Systemen, außer gemäß der US 4,787,744, nicht ausgeschlossen, daß durch einen Handhabungsfehler ein Einsatz eines mit Proben gefüllten Küvettenriegels in ein Analysengerät so erfolgt, daß die Küvetten nicht in der vorgesehenen Reihenfolge analysiert werden, wobei bei vorgenannter Druckschrift der technische Aufwand beim Analysengerät unwirtschaftlich ist.

### Darstellung der Erfindung, Aufgabe, Lösung, Vorteile

Es ist daher Aufgabe der Erfindung, einen Küvettenriegel zu schaffen, der eine sichere und fehlerfreie Handhabung und Analyse sicherstellt.

Diese Aufgabe wird durch die Merkmale des Anspruchs 1 gelöst.

Außerdem soll ein Küvettenriegel geschaffen werden, der einen sicheren Verschluß der einzelnen Meßküvetten mit einer Verschlußfolie erlaubt, wobei auch eine randseitige Beschädigung der Verschlußfolie nicht zur Öffnung der Meßküvette selbst führen soll.

Dazu ist erfindungsgemäß vorgesehen, einen gattungsgemäßen Küvettenriegel zu schaffen, der einen Transport- und Halterungskörper aufweist, der eine im wesentlichen kubische Grundform besitzt, bei der mindestens eine asymmetrisch angeordnete Ausnehmung vorgesehen ist und in dem in gleichmäßigem Abstand und in symmetrischer Anordnung Küvetten angeordnet sind, wobei die Küvetten mit ihrem geschlossenen Ende aus dem Transport- und Halterungskörper herausragen, und mit dem Rand ihrer Öffnung über den Transport- und Halterungskörper hervorragen.

Durch die erfindungsgemäße Ausgestaltung ist sichergestellt, daß jede Meßküvette einzeln am Rand mit einer Verschlußfolie, vorzugsweise aus Aluminiumfolie, verschließbar ist. Die Oberfläche des Transport- und Halterungskörpers schützt die Verschlußfolie vor Beschädigungen, wobei auch bei einer randseitigen Beschädigung der Verschlußfolie keine Meßküvette geöffnet wird, da diese erst direkt am Rand versiegelt sind.

Die Meßküvetten weisen vorzugsweise eine annähernd zylindrische Form auf, wobei auch kubische Grundformen sinnvoll sein können. Bei der zylindrischen Ausgestaltung laufen diese vorzugsweise leicht konisch zum geschlossen Ende hin zu.

Die geschlossene Seite der Meßküvetten verfügt über einen flachen Boden, wobei je nach Ausgestaltung des zu verwendenden Rührkörpers auch Spitzböden o. dgl. einsetzbar sind.

Vorzugsweise ist der Küvettenriegel einstückig mit den Meßküvetten ausgeführt. Für bestimmte Einsatzzwecke erweist sich auch eine mehrteilige Ausführung als sinnvoll, wobei der Transport- und Halterungskörper auf seiner Oberfläche Durchgangsbohrungen aufweist, in die die einzelnen Meßküvetten einsteckbar sind und randseitig gehalten werden. Auch bei der einstückigen Ausgestaltung erfolgt der Übergang vom Transport- und Halterungskörper zur Meßküvette über den Randbereich.

Der Transport- und Halterungskörper ist vorzugsweise nach unten geöffnet, so daß die Herstellung des Küvettenriegels als Spritzgußteil einfach durchführbar ist. Zur Stabilisierung des Transport- und Halterungskörpers sind zwischen den Meßküvetten und zwischen den außenliegenden Meßküvetten und den Stirnseiten Stege angeordnet, die sich über die gesamte Querschnittsfläche des Transport- und Halterungskörpers erstrecken. Diese können zur weiteren Versteifung Verdickungen aufweisen.

Um bei einer automatisierten Analyse Verwechslungen von Proben auszuschließen, die auftreten können, wenn der Küvettenriegel verdreht in eine entsprechende Einrichtung eingeführt wird, ist es vorgesehen, den Küvettenriegel mit asymmetrisch angeordneten Ausnehmungen zu versehen, in die korrespondierende Teile des Analysengerätes eingreifen, wobei hierüber auch der Transport des Küvettenriegels im Analysengerät möglich ist.

Dazu kann an der Stirnseite eine halbzylindrische Einbuchtung angeordnet sein und/oder in der Wandung einer Längsseite ein Fenster angeordnet sein. Natürlich sind beliebige Ausgestaltungen der Ausnehmungen erfindungsgemäß möglich, so daß der Küvettenriegel für beliebige Vorrichtungen verwendbar ist.

Zur Kennzeichnung der einzelnen Proben bzw. der entsprechenden Meßküvette sind die beiden Längsseiten des Transport- und Halterungskörpers mit Beschriftungen versehbar, wobei eine Klarschrift, also für den Anwender lesbar, verwandt wird und für die andere Seite eine maschinenlesbare Schrift, z. B. ein Bar-Code, so daß durch die doppelte Kennzeichnung der Probe Verwechslungen ausgeschlossen sind, wobei das Analysengerät die maschinenlesbare Schrift gleich mit den Analysendaten anzeigt, ausdruckt o. dgl.

Vorteilhafterweise können die Meßküvetten des Küvettenriegels bereits mit Reagenzflüssigkeiten und/oder einem Rührkörper versehen sein, so daß nur die zu testende Flüssigkeit hinzugefügt werden muß. Dazu muß der Küvettenriegel bereits in seiner Verkaufsausführung mit einer Verschlußfolie versiegelt werden.

Der Küvettenriegel ist vorzugsweise aus Kunststoff, wie z. B. Polypropylen, Polyethylen, Polystyrol o. dgl. gefertigt, wobei die chemische Beständigkeit gegenüber Reagenzflüssigkeiten und die optische Durchlässigkeit entscheidend sind. Für spezielle Anwendungszwecke ist auch die Fertigung aus Glas vorgesehen.

Weitere vorteilhafte Ausgestaltungen sind in den Unteransprüchen gekennzeichnet.

### Kurze Beschreibung der Zeichnungen

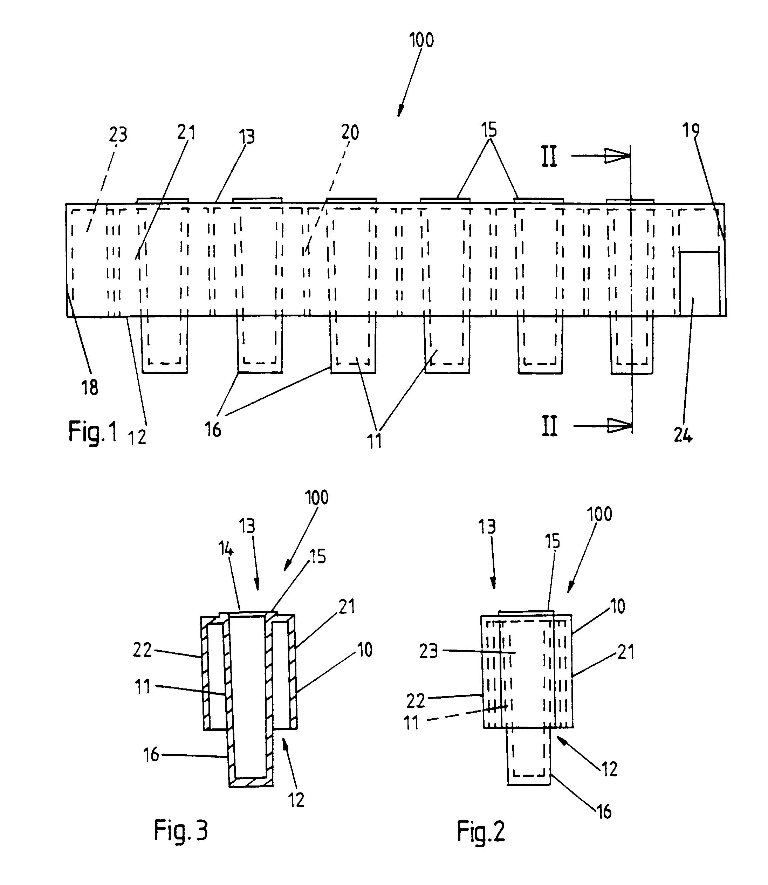

Nachstehend wird die Erfindung anhand von Zeichnungen näher erläutert. Es zeigt
- Fig. 1: in einer Seitenansicht eine Längsseite des erfindungsgemäßen Küvettenriegels,
- Fig. 2: in einer Seitenansicht eine Stirnseite des erfindungsgemäßen Küvettenriegels,
- Fig. 3: in einer geschnittenen Seitenansicht eine Stirnseite des erfindungsgemäßen Küvettenriegels,

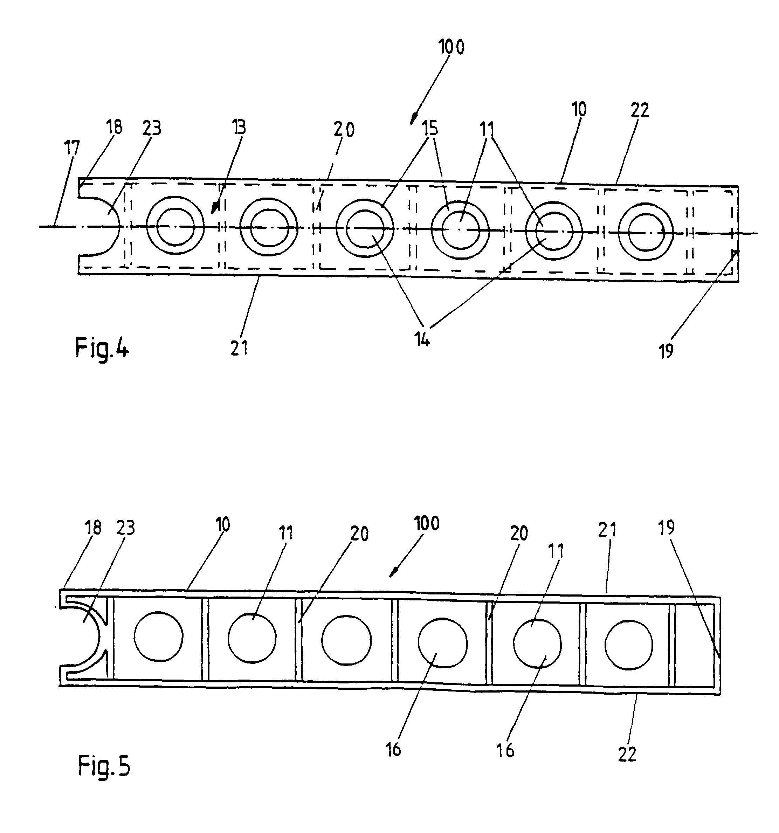

- Fig. 4: in einer Aufsicht den erfindungsgemäßen Küvettenriegel, und
- Fig. 5: in einer Ansicht von unten den erfindungsgemäßen Küvettenriegel.

### Bester Weg zur Ausführung der Erfindung

Der Küvettenriegel 100 besteht aus einem Transport- und Halterungskörper 10 sowie in diesen angeordneten und teilweise herausragenden Meßküvetten 11.

Der Transport- und Halterungskörper 10 weist eine im wesentlichen kubische Grundform auf, die im Bereich der Unterseite 12 offen ausgeführt ist. Auf der Oberseite 13 des Transport- und Halterungskörpers 10 sind die Öffnungen 14 der Meßküvetten 11 vorgesehen, wobei der Rand 15 der Meßküvetten 11 aus der Oberseite 13 des Transport- und Halterungskörpers 10 geringfügig herausragt. Die geschlossene Seite 16 der Meßküvetten 11 ragt aus der offenen Unterseite 12 des Transport- und Halterungskörpers 10 derart heraus, daß ca. ein Drittel der Meßküvette 11 freiliegt. Die Meßküvetten 11 sind entlang der Längsachse 17 des Transport- und Halterungskörpers 10 mittig in gleichem Abstand zueinander angeordnet. Die benachbart zu den beiden Stirnseiten 18, 19 liegenden Meßküvetten 11 weisen zu den Stirnseiten 18, 19 hin einen leicht vergrößerten Abstand auf als zu den benachbarten anderen Meßküvetten 11. Zwischen die Meßküvetten 11 und zwischen den außenliegenden Meßküvetten 11 und den jeweiligen Stirnseiten 18, 19 ist jeweils ein Steg 20 vorgesehen, der sich parallel zu den Stirnseiten 18, 19 von der Oberseite 13 bis zur Unterseite 12 zwischen den beiden Längsseiten 21, 22 des Transport- und Halterungskörpers 10 erstreckt. Bei einer Stirnseite 18 ist eine annähernd halbkreisförmige, vertikal angeordnete Einbuchtung 23 vorgesehen, die sich fast bis zu dem benachbarten Steg 20 erstreckt. Auf einer Längsseite 21 des Transport- und Halterungskörpers 10 ist im Bereich zwischen einer Stirnseite 18 und dem entsprechenden Steg 20 ein Fenster 24 in der Wandung vorgesehen, das sich von der Unterseite 12 bis ca. 2/3 der Höhe des Transport- und Halterungskörpers 10 erstreckt. Die Meßküvetten 11 sind im wesentlichen zylindrisch ausgeformt, jedoch laufen sie zur geschlossenen Seite 16 hin leicht konisch zu. Die Verbindung der Meßküvetten 11 zum Transport- und Halterungskörper 10 erfolgt im Bereich des Randes 15 der Meßküvetten 11.

### Bezugszeichenliste:

- Küvettenriegel: 100
- Transport- und Halterungskörper: 10
- Meßküvette: 11
- Unterseite: 12
- Oberseite: 13
- Öffnung: 14
- Rand: 15
- geschlossene Seite: 16
- Längsachse: 17
- Stirnseite: 18, 19
- Steg: 20
- Längsseite: 21, 22
- Einbuchtung: 23
- Fenster: 24

## Patentansprüche

1. Küvettenriegel (100) zur Aufnahme von optisch zu untersuchenden Substanzen, vorzugsweise zur Verwendung bei automatisierten Analysenvorgängen, der über in Reihe angeordnete Meßküvetten (11) verfügt, die einendseitig offen und im Öffnungsbereich miteinander verbunden sind, wobei der Küvettenriegel (100) einen Transport- und Halterungskörper (10) aufweist, der eine im wesentlichen kubische Grundform besitzt,
dadurch gekennzeichnet
daß beim Transport- und Halterungskörper (10) mindestens eine asymmetrisch angeordnete Ausnehmung vorhanden ist, und daß in dem Halterungskörper (10) in gleichmäßigem Abstand und in symmetrischer Anordnung Meßküvetten (11) angeordnet sind, wobei die Meßküvetten (11) mit ihrer geschlossenen Seite (16) aus dem Transport- und Halterungskörper (10) herausragen, und daß die Meßküvetten (11) mit dem Rand (15) ihrer Öffnung (14) über den Transport- und Halterungskörper (10) hinausragen.

2. Küvettenriegel nach Anspruch 1,
dadurch gekennzeichnet,
daß die asymmetrisch angeordnete Ausnehmung aus einer halbkreis- oder annähernd halbkreisförmigen Einbuchtung (23) an einer der Stirnseiten (18, 19) des Transport- und Halterungskörpers (10) besteht.

3. Küvettenriegel nach Anspruch 1,
dadurch gekennzeichnet,
daß die asymmetrische Ausnehmung aus einem im Randbereich einer Längsseite (21, 22) des Transport- und Halterungskörpers (10) angeordneten Fenster (24) besteht.

4. Küvettenriegel nach einem der Ansprüche 1 bis 3,
dadurch gekennzeichnet,
daß zwei asymmetrisch angeordnete Ausnehmungen in Küvettenriegel (100) vorgesehen sind.

5. Küvettenriegel nach einem der Ansprüche 1 bis 4,
dadurch gekennzeichnet,
daß der Transport- und Halterungskörper (10) hohl und an der Unterseite (12) offen ausgeführt ist.

6. Küvettenriegel nach einem der Ansprüche 1 bis 5,
dadurch gekennzeichnet,
daß die Meßküvetten (11) mit ihrer geschlossenen Seite (16) mit ca. 1/3 ihrer Gesamtlänge auf der Unterseite (12) des Transport- und Halterungskörpers (10) herausragen.

7. Küvettenriegel nach einem der Ansprüche 1 bis 6,
dadurch gekennzeichnet,
daß zwischen den Meßküvetten (11) und den außenliegenden Meßküvetten (11) und den Stirnseiten (18, 19) jeweils ein Steg (20) angeordnet ist.

8. Küvettenriegel nach Anspruch 7,
dadurch gekennzeichnet,
daß der Steg (20) parallel zu den Stirnseiten (18, 19) verläuft und die gesamte Querschnittsfläche oder ein Teil der Querschnittsfläche des Transport- und Halterungskörpers (10) einnimmt.

9. Küvettenriegel nach einem der Ansprüche 1 bis 8,
dadurch gekennzeichnet,
daß die Meßküvetten (11) eine zylindrische Form aufweisen.

10. Küvettenriegel nach einem der Ansprüche 1 bis 8,
dadurch gekennzeichnet,
daß die Meßküvetten (11) einen eckigen Querschnitt aufweisen.

11. Küvettenriegel nach einem der Ansprüche 1 bis 10,
dadurch gekennzeichnet,
daß die Meßküvetten (11) Bereiche mit unterschiedlichen Querschnittsprofilen aufweisen.

12. Küvettenriegel nach einem der Ansprüche 1 bis 11,
dadurch gekennzeichnet,
daß die Meßküvetten (11) zu ihrer geschlossenen Seite (16) hin leicht konisch zulaufen.

13. Küvettenriegel nach einem der Ansprüche 1 bis 12,
dadurch gekennzeichnet,
daß die geschlossene Seite (16) der Meßküvetten (11) einen flachen Boden aufweist.

14. Küvettenriegel nach einem der Ansprüche 1 bis 12,
dadurch gekennzeichnet,
daß die geschlossene Seite (16) der Meßküvetten (11) einen räumlich ausgeformten Boden aufweist.

15. Küvettenriegel nach einem der Ansprüche 1 bis 14,
dadurch gekennzeichnet,
daß der Küvettenriegel (100) aus einem Stück besteht.

16. Küvettenriegel nach einem der Ansprüche 1 bis 14,
dadurch gekennzeichnet,
daß der Küvettenriegel (100) aus dem Transport- und Halterungskörper (10) besteht, der auf seiner Oberseite (13) Öffnungen aufweist, in denen die Meßküvetten (11) in ihrem Randbereich klemmend gehalten werden.

17. Küvettenriegel nach einem der Ansprüche 1 bis 16,
dadurch gekennzeichnet,
daß der Küvettenriegel (100) eine gerade Anzahl von Meßküvetten (11) aufweist.

18. Küvettenriegel nach einem der Ansprüche 1 bis 16,
dadurch gekennzeichnet,
daß der Küvettenriegel (100) eine ungerade Anzahl an Meßküvetten (11) aufweist.

19. Küvettenriegel nach einem der Ansprüche 1 bis 18,
dadurch gekennzeichnet,
daß die Längsseiten (21, 22) mit Klarschrift und/oder maschinenlesbarer Schrift, wie z. B. einem Bar-Code versehen sind.

20. Küvettenriegel nach einem der Ansprüche 1 bis 19,
dadurch gekennzeichnet,
daß der Küvettenriegel (100) aus Kunststoff besteht, insbesondere Polypropylen, Polyethylen, Polystyrol o. dgl.

21. Küvettenriegel nach einem der Ansprüche 1 bis 19,
dadurch gekennzeichnet,
daß der Küvettenriegel (100) aus Glas besteht.

22. Küvettenriegel nach einem der Ansprüche 1 bis 20,
dadurch gekennzeichnet,
daß der Küvettenriegel (100) ein Spritzgußteil ist.

23. Küvettenriegel nach Anspruch 22,
dadurch gekennzeichnet,
daß der Boden der Meßküvetten (11) auf ihrer Außenseite jeweils einen Anspritzpunkt tragen.

24. Küvettenriegel nach einem der Ansprüche 1 bis 23,
dadurch gekennzeichnet,
daß die Meßküvetten (11) randseitig mit einer Verschlußfolie versiegelt sind.

25. Küvettenriegel nach Anspruch 24,
dadurch gekennzeichnet,
daß die Verschlußfolie aus Aluminium besteht.

26. Küvettenriegel nach Anspruch 24,
dadurch gekennzeichnet,
daß die Verschlußfolie aus Kunststoff besteht.

27. Küvettenriegel nach Anspruch 24,
dadurch gekennzeichnet,
daß die Verschlußfolie aus einem Verbundwerkstoff aus Aluminium und Kunststoffolie besteht.

28. Küvettenriegel nach einem der Ansprüche 1 bis 27,
dadurch gekennzeichnet,
daß die Meßküvetten (11) mit Reagenzflüssigkeit versehen sind.

29. Küvettenriegel nach einem der Ansprüche 1 bis 28,
dadurch gekennzeichnet,
daß in den Meßküvetten (11) ein Rührkörper eingebracht ist.

## Claims

1. A cell cover (100) for receiving substances to be optically tested, preferably for use for automatized analytical processes, which is provided with measuring cells (11) placed in a row which are open at one end and which are connected with each other in the opening area, the cell cover (100) showing a transport and holding body (10) which has a substantially cubical basic shape,
characterized in
that at least one asymmetrically placed recess exists for the transport and holding body (10) and that measuring cells (11) are placed in the holding body (10) at an equal distance and in a symmetrical arrangement, the measuring cells (11) projecting with their closed side (16) out of the transport and holding body (10) and that the measuring cells (11) project with the edge (15) of their opening (14) over the transport and holding body (10).

2. A cell cover according to claim 1,
characterized in
that the asymmetrically placed recess consists of a semicircular or an approximately semicircular hollow (23) on one of the front sides (18, 19) of the transport and holding body (10).

3. A cell cover according to claim 1,
characterized in
that the asymmetric recess consists of a window (24) placed in the edge area of a longitudinal side (21, 22) of the transport and holding body (10).

4. A cell cover according to any of the claims 1 to 3,
characterized in
that two asymmetrically placed recesses are provided for in the cell cover (100).

5. A cell cover according to any of the claims 1 to 4,
characterized in
that the transport and holding body (10) is hollow and open on the lower side (12).

6. A cell cover according to any of the claims 1 to 5,
characterized in
that the measuring cells (11) project with their closed side (16) with approximately 1/3 of their whole length on the lower side (12) of the transport and holding body (10).

7. A cell cover according to one of the claims 1 to 6,
characterized in
that respectively a link (20) is placed between the measuring cells (11) and the outer measuring cells (11) and the front sides (18, 19).

8. A cell cover according to claim 7,
characterized in
that the link (20) runs parallel to the front sides (18, 19) and occupies the whole cross-sectional area or one part of the cross-sectional area of the transport and holding body (10).

9. A cell cover according to one of the claims 1 to 8,
characterized in
that the measuring cells (11) have a cylindrical shape.

10. A cell cover according to one of the claims 1 to 8,
characterized in
that the measuring cells (11) have an angular cross section.

11. A cell cover according to one of the claims 1 to 10,
characterized in
that the measuring cells (11) have areas with different cross section profiles.

12. A cell cover according to one of the claims 1 to 11,
characterized in
that the measuring cells (11) are slightly tapered towards their closed side (16).

13. A cell cover according to one of the claims 1 to 12,
characterized in
that the closed side (16) of the measuring cells (11) has a flat bottom.

14. A cell cover according to one of the claims 1 to 12,
characterized in
that the closed side (16) of the measuring cells (11) has a bottom shaped in space.

15. A cell cover according to one of the claims 1 to 14,
characterized in
that the cell cover (100) is made of one piece.

16. A cell cover according to one of the claims 1 to 14,
characterized in
that the cell cover (100) consists of the transport and holding body (10) which has openings on its upper side (13) in which the measuring cells (11) are held jammed in their edge area.

17. A cell cover according to one of the claims 1 to 16,
characterized in
that the cell cover (100) has an even number of measuring cells (11).

18. A cell cover according to one of the claims 1 to 16,
characterized in
that the cell cover (100) has an uneven number of measuring cells (1).

19. A cell cover according to one of the claims 1 to 18.
characterized in
that the longitudinal sides (21, 22) are provided with plain writing and/or with machine readable writing, such as for example a bar code.

20. A cell cover according to one of the claims 1 to 19,
characterized in
that the cell cover (100) is made of plastic, in particular of polypropylene, polyethylene, polystyrene or the like.

21. A cell cover according to one of the claims 1 to 19,
characterized in
that the cell cover (100) is made of glass.

22. A cell cover according to one of the claims 1 to 20,
characterized in
that the cell cover (100) is an injection moulded part.

23. A cell cover according to claim 22,
characterized in
that the bottom of the measuring cells (11) carries on its outside respectively one injection point.

24. A cell cover according to one of the claims 1 to 23,
characterized in
that the measuring cells (11) are sealed on their edges with a sealing foil.

25. A cell cover according to claim 24,
characterized in
that the sealing foil is made of aluminium.

26. A cell cover according to claim 24,
characterized in
that the sealing foil is made of plastic.

27. A cell cover according to claim 24,
characterized in
that the sealing foil is made of a composite material made of aluminium and plastic foil.

28. A cell cover according to any of the claims 1 to 27,
characterized in
that the measuring cells (11) are provided with test liquid.

29. A cell cover according to any of the claims 1 to 28,
characterized in
that a stirring body is placed in the measuring cells (11).

## Revendications

1. Couvercle de cuve (100) pour recevoir des substances à analyser optiquement, de préférence pour utiliser lors de processus d'analyse automatisés, qui dispose de cuves de mesure (11) placées en rangée qui sont ouvertes à une extrémité et qui sont reliées l'une à l'autre dans la zone d'ouverture, le couvercle de cuve (100) présentant un corps de transport et de fixation (10) qui possède une forme de base essentiellement cubique,
caractérisé en ce
qu'au moins un évidement placé asymétriquement existe pour le corps de transport et de fixation (10) et que des cuves de mesure (11) sont placées dans le corps de fixation (10) à une distance égale et en disposition symétrique, les cuves de mesure (11) faisant saillie avec leur côté fermé (16) du corps de transport et de fixation (10), et que les cuves de mesure (11) font saillie avec le bord (15) de leur ouverture (14) au-dessus du corps de transport et de fixation (10).

2. Couvercle de cuve selon la revendication 1,
caractérisé en ce
que l'évidement placé asymétriquement consiste en un échancrement (23) semi-circulaire ou approximativement semi-circulaire sur l'une des faces frontales (18, 19) du corps de transport et de fixation (10).

3. Couvercle de cuve selon la revendication 1,
caractérisé en ce
que l'évidement asymétrique consiste en une fenêtre (24) placée dans la zone marginale d'un côté longitudinal (21, 22) du corps de transport et de fixation (10).

4. Couvercle de cuve selon l'une des revendications 1 à 3,
caractérisé en ce
que deux évidements placés asymétriquement sont prévus dans le couvercle de cuve (100).

5. Couvercle de cuve selon l'une des revendications 1 à 4,
caractérisé en ce
que le corps de transport et de fixation (10) est conçu creux et ouvert sur la face inférieure (12).

6. Couvercle de cuve selon l'une des revendications 1 à 5,
caractérisé en ce
que les cuves de mesure (11) font saillie avec leur côté fermé (16) avec environ 1/3 de leur longueur totale sur la face inférieure (12) du corps de transport et de fixation (10).

7. Couvercle de cuve selon l'une des revendications 1 à 6,
caractérisé en ce
qu'un plan fixe (20) est respectivement placé entre les cuves de mesure (11) et les cuves de mesure situées à l'extérieur (11) et les faces frontales (18, 19).

8. Couvercle de cuve selon la revendication 7,
caractérisé en ce
que le plan fixe (20) va parallèlement aux faces frontales (18, 19) et prend toute la surface en coupe transversale ou une partie de la surface en coupe transversale du corps de transport et de fixation (10).

9. Couvercle de cuve selon l'une des revendications 1 à 8,
caractérisé en ce
que les cuves de mesure (11) ont une forme cylindrique.

10. Couvercle de cuve selon l'une des revendications 1 à 8,
caractérisé en ce
que les cuves de mesure (11) ont une section angulaire.

11. Couvercle de cuve selon l'une des revendications 1 à 10,
caractérisé en ce
que les cuves de mesure (11) ont des zones avec différents profils de section transversale.

12. Couvercle de cuve selon l'une des revendications 1 à 11,
caractérisé en ce
que les cuves de mesure (11) sont légèrement effilées vers leur côté fermé (16).

13. Couvercle de cuve selon l'une des revendications 1 à 12,
caractérisé en ce
que le côté fermé (16) des cuves de mesure (11) présente un fond plat.

14. Couvercle de cuve selon l'une des revendications 1 à 12,
caractérisé en ce
que le côté fermé (16) des cuves de mesure (11) présente un fond moulé dans l'espace.

15. Couvercle de cuve selon l'une des revendications 1 à 14,
caractérisé en ce
que le couvercle de cuve (100) est constitué en une pièce.

16. Couvercle de cuve selon l'une des revendications 1 à 14,
caractérisé en ce
que le couvercle de cuve (100) est constitué par le corps de transport et de fixation (10) qui présente sur sa face supérieure (13) des ouvertures dans lesquelles les cuves de mesure (11) sont maintenues coïncées dans leur zone marginale.

17. Couvercle de cuve selon l'une des revendications 1 à 16,
caractérisé en ce
que le couvercle de cuve (100) présente un nombre pair de cuves de mesure (11).

18. Couvercle de cuve selon l'une des revendications 1 à 16,
caractérisé en ce
que le couvercle de cuve (100) présente un nombre impair de cuves de mesure (11).

19. Couvercle de cuve selon l'une des revendications 1 à 18,
caractérisé en ce
que les côtés longitudinaux (21, 22) sont pourvus de langage clair et/ou de langage exploitable par machine, comme par exemple d'un code-barres.

20. Couvercle de cuve selon l'une des revendications 1 à 19,
caractérisé en ce
que le couvercle de cuve (100) est en plastique, en particulier en polypropylène, en polyéthylène, en polystyrène ou équivalent.

21. Couvercle de cuve selon l'une des revendications 1 à 19,
caractérisé en ce
que le couvercle de cuve (100) est en verre.

22. Couvercle de cuve selon l'une des revendications 1 à 20,
caractérisé en ce
que le couvercle de cuve (100) est une pièce moulée par injection.

23. Couvercle de cuve selon la revendication 22,
caractérisé en ce
que le fond des cuves de mesure (11) porte, sur sa face extérieure, respectivement un point d'injection.

24. Couvercle de cuve selon l'une des revendications 1 à 23,
caractérisé en ce
que les cuves de mesure (11) sont scellées sur les bords avec une feuille de fermeture.

25. Couvercle de cuve selon la revendication 24,
caractérisé en ce
que la feuille de fermeture est en aluminium.

26. Couvercle de cuve selon la revendication 24,
caractérisé en ce
que la feuille de fermeture est en plastique.

27. Couvercle de cuve selon la revendication 24,
caractérisé en ce
que la feuille de fermeture est en un matériau composite en aluminium et en feuille de plastique.

28. Couvercle de cuve selon la revendication 24,
caractérisé en ce
que les cuves de mesure (11) sont pourvues de liquide à réactif.

29. Couvercle de cuve selon l'une des revendications 1 à 28,
caractérisé en ce
qu'un corps agitateur est mis en place dans les cuves de mesure (11).
